## Europäisches Patentamt

## European Patent Office

## Office européen des brevets

(19)

(11) Veröffentlichungsnummer: **0 037 507**
**B1**

---

(12) **EUROPÄISCHE PATENTSCHRIFT**

(45) Veröffentlichungstag der Patentschrift:
**25.01.84**

(51) Int. Cl.³: **B 44 F 1/12**

(21) Anmeldenummer: **81102166.6**

(22) Anmeldetag: **23.03.81**

(54) **ID-Karte oder Dokument mit integriertem Sicherheitsfaden.**

(30) Priorität: **03.04.80 DE 3013238**

(43) Veröffentlichungstag der Anmeldung:
**14.10.81 Patentblatt 81/41**

(45) Bekanntmachung des Hinweises auf die Patenterteilung:
**25.01.84 Patentblatt 84/4**

(84) Benannte Vertragsstaaten:
**AT BE CH DE FR GB IT LI NL SE**

(56) Entgegenhaltungen:
**DE - A - 1 446 851**
**DE - A - 2 631 246**
**DE - B - 2 308 876**
**US - A - 4 066 873**

(73) Patentinhaber: **AGFA-GEVAERT Aktiengesellschaft,
D-5090 Leverkusen 1 (DE)**

(72) Erfinder: **von Kempski, Walter, Schenkendorfstrasse 6,
D-5090 Leverkusen (DE)**
Erfinder: **Kirstein, Fritz, Zillestrasse 113,
D-5000 Köln 80 (DE)**

EP 0 037 507 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### ID-Karte oder Dokument mit integriertem Sicherheitsfaden

Die Erfindung betrifft eine ID-Karte oder ein Dokument, in der oder dem ein Sicherheitsfaden unlösbar integriert ist, der eine ihn identifizierende Querschnittsform mit einer Struktur an seiner Oberfläche besitzt, die sich gleichbleibend über die Fadenlänge erstreckt.

Es ist bekannt, Dokumente wie Banknoten, Wertpapiere, Berechtigungs- und Ausweiskarten (ID-Karten) oder auch Pässe mit einer Vielzahl von Sicherungen zu versehen, die ein Fälschen dieser Dokumente unmöglich machen sollen.

Beispiele derartiger Sicherungen:

— Rasterdruck oder Notenliniendruck auf dem Dokument. Hintergrundlinien, wie sie beispielsweise in der DE-OS Nr. 2630002 beschrieben sind.

— Dokumente besitzen häufig sichtbare oder fühlbare Wasserzeichen in Spezialpapieren. Die Druckfarben der Dokumente sind mit photographischen Materialien oft nur schwer reproduzierbar. Aus der DE-OS Nr. 2908742 ist es bekannt, Dokumente mit derartigen reproduzierungs- bzw. fälschungssicheren farbigen Darstellungen zu versehen.

— Es ist allgemein bekannt, Dokumente, wie ID-Karteneinlagen mit Passbildern, Unterschriften, Fingerabdrücken zu versehen und die Dokumente dann zwischen Folien einzuschweissen.

— Um ein Austauschen eingelegter Passbilder zu verhindern, kann die Einlage aus einem Stück speziellen Photopapiers hergestellt werden, welches mit photographischen Emulsionen beschichtet wird und auf die Schichten die Daten und das Passbild aufbelichtet und entwickelt werden. Diese Einlage kann dann noch mit zusätzlicher Linien- oder Rasterdrucken versehen und zwischen Folien eingeschweisst werden.

— Die schweizerische Patentschrift Nr. 4077066 beschreibt eine Ausweiskarte, in der Wasserzeichen, radioaktive oder fluorezierende Markierungen, sowie eine auf einer Zwischenschicht aufgebrachte photographische Emulsionsschicht, welche ein Passbild des Ausweisinhabers trägt, vorgesehen sind. Ferner ist ein bei der fertigen Ausweiskarte nicht mehr zugänglicher Unterschriftsstreifen, sowie ein auf die äussere Deckfolie aufgebrachter Prägestempel vorgesehen. Ein zusätzlicher Aufdruck auf dem Kartenrohling in Form dünner Wellenlinien, wie zum Beispiel bei Banknoten, die in verschiedenen Farben ausgeführt sein können, erweitern den Schutz gegen Fälschungen.

— Weiterhin ist bekannt, photographische Aufzeichnungen auf die Dokumente aufzubringen. Eine andere übliche Sicherheitsvorkehrung ist die Präparation einer der inneren Seiten oder der Oberfläche der Dokumente mit Farbstoffen, die nur bei Wellenlängen im Ultraviolett- oder im Infrarotbereich sichtbar werden.

— Aus der DE-OS Nr. 2631246 ist bekannt, Dokumente wie Ausweiskarten, Berechtigungskarten und dergleichen mit Dauermagneten, Magnetblättern, Magnetbändern oder Metallblättern zu versehen. Diese Einrichtungen können zum Öffnen eines magnetischen Schlosses oder zur Betätigung eines Schalters verwendet werden. Aus der US-PS Nr. 4066873 ist die Einlage von Magnetstreifen, die kodierte magnetische Informationen enthalten, vorgesehen, wobei gleichzeitig ein aufgredruckter Binärcode zur optischen Abfrage vorgesehen ist.

— Ferner ist aus der DE-AS Nr. 2308876 bekannt, ähnlich wie bei Banknoten, ein Papier zu verwenden, welches als Träger der eigentlichen Sicherheits- und Echtheitsmerkmale mit sicht- und fühlbaren Wasserzeichen und einem Sicherheitsfaden versehen ist und welches ein- oder zweiseitig mit wertpapier- bzw. banknotenpapiermässigen Ausstattung bedruckt ist. Der Sicherheitsfaden wird hierbei bei der Herstellung des Papieres in den Papierfilz eingegautscht.

— Schliesslich beschreibt die DE-A Nr. 1446851 eine Sicherheitseinrichtung für ein Sicherheitspapier, bei dem ein Faden, Streifen oder dergleichen mit einer Zeichnung, einer Beschriftung oder einem Muster bedruckt ist. In einem ebenfalls beschriebenen Verfahren wird eine Bahn beispielsweise mit Druckbuchstaben mit einer Höhe von 0,1 bis 0,4 mm spaltenförmig bedruckt und in Fäden aufgeschnitten. Die Fäden werden dann in ein Sicherheitspapier eingearbeitet. Um eine Fälschung zu erschweren, können aus verschiedenen Materialien kombinierte Unterlagen für die zu bedruckende Bahn und schwerer zu beschaffende spezielle Druckfarben verwendet werden.

Diese und eine Vielzahl weiterer bekannte Ausführungsarten von Dokumenten haben den Nachteil, dass sie keinen sicheren Schutz gegen potentielle Fälscher bieten und keine leichte und eindeutige Echtheitsfeststellung mit einfachen Mitteln durch Menschen erlauben. Eine Kombination einer Vielzahl von Sicherheitsmassnahmen erschwert natürlich die Fälschung derartiger Dokumente, bringt aber gleichzeitig eine erhebliche Verteuerung der Dokumente mit sich. Hohe Sicherheit für ein Dokument erfordert derzeit Bestandteile aus geheimgehaltenen Stoffen, die nicht im freien Handel erhältlich sind und deren Herstellung und Verteilung einer Registrierungspflicht unterliegen. Die Produktion der Dokumente soll mit gewerbeunüblichen Einrichtungen (Sonderkonstruktionen) erfolgen, die im Falle kleiner Auflagen sehr aufwendig sind.

Der Erfindung liegt daher die Aufgabe zugrunde, eine ID-Karte oder ein Dokument der eingangs genannten Art sowie ein Verfahren zu deren Herstellung zu schaffen, mit denen es mit einfachen Mitteln möglich ist, die ID-Karte oder das Dokument als echt zu identifizieren und wobei die ID-Karte oder das Dokument preiswert in der Herstellung und in höchsten Masse fälschungssicher sein sollen. Diese Aufgabe wird für eine ID-Karte oder ein Dokument der einleitend genannten Ausbildung gemäss der Erfindung dadurch gelöst, dass die Querschnittsform und die Struktur der Oberfläche des Sicherheitsfadens (1) beim Ziehen des Fadens durch eine Kalibriereinrichtung erzeugt worden sind.

Überraschenderweise zeigt sich, dass ein derartiger Sicherheitsfaden auch bei sehr grossen Längen stets die gleiche Querschnittsform und die ihm von dem Ziehkaliber eingeprägte Struktur behält. Ähnlich wie man an einer Revolverkugel stets feststellen kann, ob sie von der gleichen Waffe abgefeuert wurde, kann der Sicherheitsfaden optisch vergrössert mit der Aufnahme eines Originalsicherheitsfadens in einfacher Art und Weise verglichen und sicher festgestellt werden, ob es sich um ein Original oder um eine Fälschung handelt.

Der Sicherheitsfaden kann aus beliebigen Materialien hergestellt werden zum Beispiel aus Metalldrähten oder Metallegierungsdrähten, soweit sich diese in einer Kalibriereinrichtung kalt oder unter Anwendung von Wärme verformen lassen. Besonders geeignet sind Aluminiumdrähte, Drähte aus Legierungen von Blei, Zinn und Zink und Kupferdrähte. Drähte aus speziellen Legierungen oder aus Edelmetallen können auch verwendet werden, sind aber in der Beschaffung erheblich aufwendiger, ohne weitere wesentliche Vorteile zu bringen.

Der Sicherheitsfaden kann auch aus Glas oder aus Kunststoff hergestellt werden, wobei es vorteilhaft ist, das Ausgangsmaterial einzufärben, so dass die durch das Kalibrierwerkzeug erzeugten Strukturen besser sichtbar sind.

Die Herstellung des Sicherheitsfadens und das Material für ein Sicherheitsfaden ist somit sehr preiswert. Die Aufbringung eines kalibrierten Sicherheitsdrahtes auf ein Dokument ist ebenfalls leicht und preiswert durchführbar. So können auf Banknoten und Wertpapiere kalibrierte Sicherheitsdrähte oder -fäden aufgeklebt werden und durch eine Lackschicht vor beschädigungen geschützt werden.

Besonders vorteilhaft ist das Auflegen oder Aufkleben von Sicherheitsfäden auf Dokumente die ein- oder beidseitig in Folien einkaschiert oder eingeschweisst werden, wie dies zum Beispiel bei Berechtigungskarten, Ausweiskarten und Reisepässen erfolgt.

Normalerweise bestehen diese Karten (ID-Karten) aus einer Folie auf die Einlage, bestehend aus beispielsweise einem Photopapier mit Passbildaufnahme und persönlichen Daten, Unterschrift usw. untrennbar aufgebracht ist und einer Deckfolie, die mit der unteren Folie und der Einlage verschweisst ist. Der Sicherheitsfaden wird zwischen die Einlage und die Deckfolien eingelegt und mit diesen verschweisst. Durch die Deckfolie hindurch ist dann bei einer Vergrösserung die Querschnittsform und die Struktur des Sicherheitsfadens gut erkennbar und kann mit einem Original oder mit einer vergrösserten Aufnahme eines Originalfadens in einfacher Art und Weise verglichen und identifiziert werden.

Der kalibrierte Sicherheitsfaden ist auch in erstaunlicher Weise fälschungssicher. Da für alle Sicherheitsfäden in einem Anwendungsbereich, zum Beispiel für die Kennkarten eines Landes, das selbe und somit nur ein Kalibrierwerkzeug verwendet werden kann, ist ein Missbrauch des Werkzeuges leicht zu verhindern.

Einem Fälscher wird es wohl kaum gelingen, ein Kalibrierwerkzeug mit allen seinen gewollten und ungewollten Unregelmässigkeiten nachzubauen, um auch nur ähnliche Sicherheitsfäden herzustellen. Ein Ablösen des Sicherheitsfadens zum Aufbringen eines originalen Sicherheitsfadens auf ein anderes Dokument kann leicht dadurch verhindert werden, dass die Sicherheitsfäden in ihrer Materialstärke sehr dünn und in ihrer Materialbeschaffenheit sehr spröde ausgestattet werden.

Die Sicherheitsfäden können in ihren Materialeigenschaften so gewählt und so auf den Dokumenten oder in den Karten befestigt werden, dass ein Versuch zur Ablösung oder Herauslösung zur Zerstörung des Sicherheitsfadens führt.

Während zum Aufkleben der Sicherheitsfäden auf dokumente vorzugsweise flache rechteckförmige Querschnitte der Sicherheitsfäden verwendet werden, um eine möglichst grosse Klebefläche zu erhalten, können Sicherheitsfäden, die in Folien eingeschweisst werden alle denkbaren Querschnitte besitzen.

Der Querschnitt des Sicherheitsfadens und dessen Abmessungen sind, je nach dem gewünschten Effekt, frei wählbar. Sehr dünne Sicherheitsfäden von zum Beispiel einem Durchmesser von 20 μm ergeben bei einer 100fachen Vergrösserung eine Breite von 2 mm, auf der Einzelheiten auf der Fadenoberfläche nur schwer zu erkennen sind.

Für derartige Sicherheitsfäden ist deshalb eine Vergrösserung von 500- bis 1000fach erforderlich, die dann eine Oberfläche des Fadens von 10 bzw. 20 mm Breite zeigt. Werden dickere Sicherheitsfäden von 200 μm oder 1 mm verwendet, so lassen sich schon bei einer 100fachen Vergrösserung für die Beurteilung ausreichende Merkmale der Oberflächenstruktur auf einer Breite von 20 oder 100 mm sehen und mit der Originalstruktur vergleichen.

Bezüglich des Volumens und der sichtbaren Oberfläche ist ein bandförmiger Sicherheitsfaden, zum Beispiel mit einer Dicke von 0,02 bis 0,05 mm und einer Breite von 1 bis 2 mm vorteilhaft, da bei einem geringen Volumen und einer geringen Reissfestigkeit eine grosse sichtbare Vergleichsfläche entsteht.

Weitere Vorteile und Anwendungsmöglichkeiten sowie Ausführungsformen sind in folgender Beschreibung in Verbindung mit beiliegenden Zeichnungen zu ersehen. Es zeigt:

Fig. 1 eine Ausführungsform des Sicherheitsfadens mit einem kreisförmigen Querschnitt.

Fig. 2 eine Ausführungsform des Sicherheitsfadens mit einem rechteckigen Querschnitt.

Fig. 3 eine Ausführungsform des Sicherheitsfadens mit einem abgewandelten rechteckigen Querschnitt.

Fig. 4 eine Ausführungsform des Sicherheitsfadens mit einem abgewandelten rechteckigen Querschnitt nach einer zusätzlichen seitlichen Verformung.

Fig. 5 einen Sicherheitsfaden in einer ID-Karte.

Fig. 6 zwei Sicherheitsfäden auf einem Dokument.

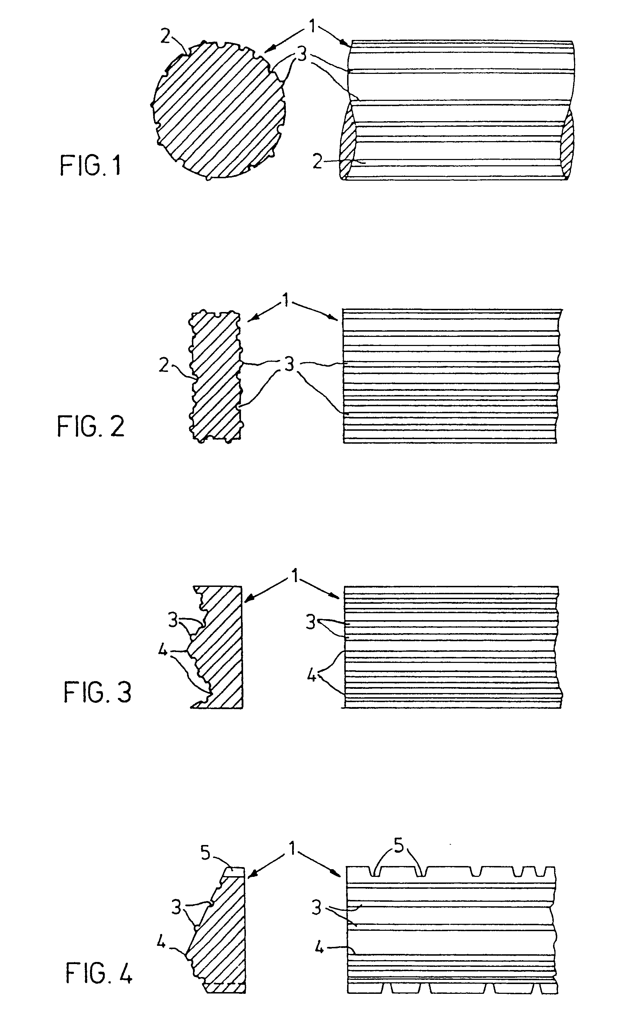

Fig. 1 zeigt einen Sicherheitsfaden 1 mit einem kreisförmigen Querschnitt im Schnitt (links) und in einer Aufsicht (rechts). Der Faden 1 wurde in einem Kalibrierwerkzeug gezogen, welches einen kreisförmigen Querschnitt besitzt. In dem Werkzeug sind am Umfang des kreisförmigen Querschnittes mindestens vier nach innen ragende Grate so angeordnet, dass sie voneinander verschiedene Abstände besitzen. Diese Grate dienen zur Bestimmung der jeweiligen obenliegenden Seite des runden mit dem Werkzeug gezogenen Fadens. Zwischen den nach innen ragenden Graten befinden sich eine Vielzahl von Ziehnuten und Ziehgraten in unregelmässigen Abständen, die bei der Herstellung des Kalibrierwerkzeuges entstehen.

Die eingearbeiteten Grate des Werkzeuges erzeugen auf dem Umfang des Fadens 1 starke Rillen 2, und die dazwischenliegenden Ziehnuten und Ziehgrate des Werkzeuges schwächere Grate und Nuten 3 auf dem Faden 1.

Zur Identifizierung eines Sicherheitsfadens werden die von den Ziehnuten und Ziehgraten des Werkzeuges auf dem Faden 1 enstandenen Grate und Nuten 3 zwischen den vom Werkzeug erzeugten zugehörigen Rillen 2 bezüglich ihrer Form und ihres Abstandes voneinander verglichen.

Da die Überprüfung auf Echtheit auf einen einfachen Vergleich der Form und der Abstände der Ziehnuten und Ziehgrate auf einem Sicherheitsfaden und einem Originalsicherheitsfaden beruht, ist es auch möglich dem Sicherheitsfaden beim Passieren des Kalibrierwerkzeuges einen Drall zu geben, so dass die Ziehnuten und Ziehgrate spiralförmig um den Sicherheitsfaden herumlaufen, und eine Fälschung, wenn überhaupt möglich, noch wesentlich schwieriger wird.

Fig. 2 zeigt einen Sicherheitsfaden 1 mit einem rechteckigen Querschnitt, wobei das Verhältnis Breite zu Höhe je nach dem Verwendungszweck gewählt werden kann.

Die Oberfläche auf dieser Ausführung eines Sicherheitsfadens zeigt die charakteristischen Ziehnuten und Ziehgrate 3, die beim Ziehen durch ein Kalibrierwerkzeug entstehen.

Um ein Erkennen der Ober- und Unterseite zu ermöglichen, ist eine der breiten Seiten mit einer Rille 2 versehen, die von einem eingearbeitetem Grat in dem Kalibrierwerkzeug hervorgerufen wird. Für den Sicherheitsfaden sind, wenn er ohne seitliche Orientierung auf Dokumente aufgebracht wird, zwei Vergleichsmuster erforderlich, einmal eins mit der Rille 2 und eins ohne Rille 2 und den zugehörigen Ziehnuten und Ziehgraten.

Fig. 3 zeigt einen rechtwinkligen Sicherheitsfaden, dessen Oberflächen beim Ziehen unregelmässig verformt wurden und der so ausser den Ziehnuten und Ziehgraten 3 die Kanten 2 in der Längsrichtung zur Oberfläche zeigt. Durch die Kanten 2 wird ein Vergleich der Vergrösserung des Originals mit dem zu prüfenden Sicherheitsfäden erleichtert, da die Oberfläche in Felder aufgeteilt ist.

Die Form des Querschnittes des Sicherheitsfadens ist keineswegs auf die Formen der Fig. 1 bis 3 beschränkt, vielmehr sind auch andere Querschnittsformen, wie beispielsweise eine Dreieckform oder ein ovaler Querschnitt oder weitere Kombinationen von Querschnittsformen möglich.

Eine besondere zusätzliche Kennzeichnung erhält der Sicherheitsfaden dadurch, dass er beim Verlassen des Kalibrierwerkzeuges seitlich von zwei gegeneinander wirkenden Rändelrädern erfasst und mit regelmässigen oder, wie in Fig. 4 dargestellt, mit unregelmässiger Rändelungen 4 versehen wird. Ausser den bereits erwähnten Kennzeichen 2 und 3 gibt die Rändelung 4 ein zusätzliches Erkennungsmerkmal für einen Sicherheitsfaden, welches beispielsweise vergrössert leicht mit der vergrösserten Aufnahme des Originales verglichen und als echt identifiziert werden kann.

Weiterhin ist es auch möglich, aber nicht erforderlich, dem Sicherheitsfaden weitere Merkmale zu geben. Der Sicherheitsfaden kann aus bestimmten Metallen und Metallegierungen bestehen. Er kann radioaktiv, magnetisch oder fluoreszierend sein oder einen bestimmten ohmschen Widerstand pro Längeneinheit besitzen. Durch Eloxieren des Fadens lassen sich verschiedene Farben erzeugen. Somit ist es auch möglich, mit einem Kalibrierwerkzeug ID-Karten herzustellen, deren Sicherheitsfäden der gleichen optischen Prüfung unterzogen werden können, wobei beispielsweise aber für ID-Karten für Männer ein Kupferfaden und für Frauen ein Aluminiumfaden verwendet wird.

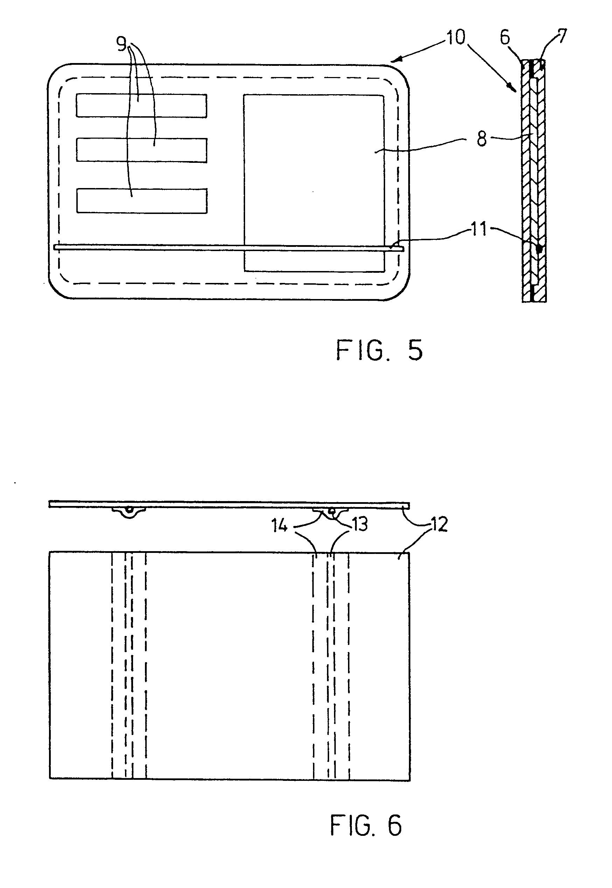

In Fig. 5 ist ein Anwendungsbeispiel für einen kalibrierten Sicherheitsfaden gezeigt, wobei der Faden 1 in eine Identifikationskarte (ID-Karte) 10 eingeschweisst ist. ID-Karten können Ausweiskarten zur Identifizierung ihres Inhabers sein oder ihn als Angehörigen einer bestimmten Gruppe ausweisen, oder auch Berechtigungskarten, die es dem Inhaber ermöglichen, bestimmte Leistungen in Anspruch zu nehmen.

Die ID-Karte 10 besteht beispielsweise aus einer Folie 6 als Rückschicht, einer Einlage 8 mit Passbild und persönlichen Daten 9 des Inhabers und einer Deckfolie 7 aus einem durchsichtigen Material.

Die Einlage 8 kann aus einem Photopapier mit einer Schwarz-Weiss- oder Coloremulsionsbeschichtung bestehen. Durch Belichtung werden die Daten 9 des Inhabers und das Passbild aufbelichtet und entwickelt. Die Einlage 8 wird mit mindestens einem Sicherheitsfaden 11 versehen, zwischen die Folie 6 und die Deckfolie 7 gebracht, und die Folien aufeinander an den Rändern verschweisst. Eine grössere Sicherheit gegen unbefugte Manipulationen an der Einlage 8 wird bekannterweise dadurch erhalten, dass die Folien 6 und 7 beidseitig untrennbar mit der gesamten Fläche der Einlage 8 durch Verkleben oder Verschweissen verbunden werden. Hierbei wird dann auch der Sicherheitsfaden 11 untrennbar mit der Einlage 8 und der Deckfolie 7 verbunden und in diese eingebettet.

Die so gefertigte ID-Karte besitzt somit ein aussergewöhnlich hohes Mass an Sicherheit bei einem Minimum an Kosten für das Material und die Herstellung. Weitere Sicherheitsvorkehrung der Art, wie die eingangs erwähnten, können natürlicherweise vorgesehen werden, sind aber nur für spezielle Zwecke wie zum Beispiel für eine Lesbarkeit durch Maschinen oder elektromagnetische Vorrichtungen erforderlich.

Für die ID-Karten eignen sich alle beschriebenen Formen von Sicherheitsfäden, also sowohl Fäden mit rundem, ovalem, rechteckigem oder anderen Querschnitten.

Zur Echtheitskontrolle der ID-Karte wird diese zum Beispiel in ein mikroskopähnliches Vergrösserungsgerät mit einer Vergrösserung von 50 bis 500fach eingelegt und die Oberflächenstruktur des zu prüfenden Sicherheitsfadens mit einer im gleichen Massstab hergestellten photographischen Vergrösserung des Originalsicherheitsfadens verglichen. Derartige Kontrollen sind sowohl von ortsfesten (Grenzstellen) oder auch beweglichen Kontrollstellen (z.B. Autostreifen) durchführbar und erfordern kein besonders angelerntes Personal oder besonders kostspielige Geräte bei grösster Sicherheit der Überprüfung auf Echtheit.

Aus der Kriminaltechnik sind Vergleichsmikroskope bekannt, die sich ebenfalls zum Vergleich und zur Identifizierung der Sicherheitsfäden eignen. Eine weitere sehr genaue Überprüfung des Sicherheitsfadens ist auch mit einem Mikroskop zur Betrachtung des zu überprüfenden Sicherheitsfadens möglich, in welches die Nuten und Rillen des Originalfadens zum Vergleich eingespiegelt und übereinander gebracht werden.

Ebenso können an ortsfesten Kontrollstellen elektronische Abfragevorrichtungen verwendet werden, um die Sicherheitsfäden zu überprüfen.

Fig. 6 zeigt eine Verwendung des Sicherheitsfadens zur Sicherung von Dokumenten oder Pässen 12. Bei der Herstellung der Dokumente 12 werden ein oder mehrere Sicherheitsfäden 13 mit einem Kleber so auf dem Dokument aufgeklebt, dass sie unlösbar mit diesem verbunden sind und ein Ablöseversuch zur Zerstörung des Fadens 13 führt. Nach dem Aufkleben wird die Oberfläche des Sicherheitsfadens 13 durch ein klare Lackschicht überzogen. Die Überprüfung der Echtheit erfolgt dann durch die Lackschicht wie beschrieben.

Bevorzugt werden für aufzuklebende Sicherheitsfäden dünne Metallstreifen verwendet, die eine verhältnismässig breite Kontrollfläche bei einer geringen Dicke besitzen. Hierdurch wird das Volumen und die Reissfestigkeit erheblich reduziert, wodurch ein Ablösen des Sicherheitsfadens ohne Beschädigung von Faden oder Dokument erschwert wird.

Der beschriebene Sicherheitsfaden stellt ein äusserst sicheres Mittel dar, um Dokumente, wie Banknoten, Urkunden, Pässe und ID-Karten auf einfachste Weise vor Fälschungen zu schützen. Die Herstellung der Sicherheitsfäden und deren Aufbringung auf Dokumente oder in ID-Karten lässt sich leicht und preiswert durchführen. Die Echtheitsprüfung durch Vergleich eines Originalfadens mit einem Sicherheitsfaden auf einem Dokument lässt sich in einfacher Weise optisch mit einem preiswerten Vergrösserungsgerät oder Mikroskop von jedermann durchführen, ohne dass die Gefahr besteht, dass Fälscher Mittel in die Hand bekommen, die ein Fälschen erleichtern würden.

### Patentansprüche

1. ID-Karte oder ein Dokument, in der oder dem ein Sicherheitsfaden unlösbar integriert ist, der eine ihn identifizierende Querschnittsform mit einer Struktur an seiner Oberfläche besitzt, die sich gleichbleibend über die Fadenlänge erstreckt, dadurch gekennzeichnet, dass die Querschnittsform und die Struktur der Oberfläche des Sicherheitsfadens (1) beim Ziehen des Fadens durch eine Kalibriereinrichtung erzeugt worden sind.

2. ID-Karte oder Dokument nach Anspruch 1, dadurch gekennzeichnet, dass der Sicherheitsfaden (1) zunächst in einer bestimmten Querschnittsform hergestellt worden ist und weitere sich in kurzen Abständen wiederholende Strukturen (5) durch zusätzliches Verformen des Sicherheitsfadens aufgebracht worden sind.

3. ID-Karte oder Dokument nach den Ansprüchen 1 und 2, dadurch gekennzeichnet, dass der Sicherheitsfaden (1) aus einem Metall oder einer Metallegierung hergestellt ist.

4. ID-Karte oder Dokument nach den Ansprüchen 1 und 2, dadurch gekennzeichnet, dass der Sicherheitsfaden aus Glas oder aus Kunststoff besteht.

5. Dokument nach Anspruch 1, dadurch gekennzeichnet, dass mindestens ein Sicherheitsfaden (13) unlösbar auf ein Dokument (12) aufgeklebt und durch eine Lackschicht (14) geschützt ist.

6. Verfahren zur Herstellung einer ID-Karte oder eines Dokumentes, in der oder dem ein Sicherheitsfaden unlösbar integriert ist, der eine ihn identifizierende Querschnittsform mit einer Struktur an seiner Oberfläche besitzt, die sich gleichbleibend über die Fadenlänge erstreckt, dadurch gekennzeichnet, dass aus einem Ausgangsmaterial wie Metall, Metallegierungen, Kunststoff oder Glas ein Faden gezogen wird, der Faden durch ein Kalibrierwerkzeug geführt wird, und dem Faden durch das Kalibrierwerkzeug eine ihn identifizierende Querschnittsform und eine Oberflächenstruktur (2, 3) eingeprägt wird.

7. Verfahren zur Herstellung einer ID-Karte oder eines Dokumentes nach Anspruch 6, dadurch gekennzeichnet, dass der Sicherheitsfaden (1) nach der Herstellung und Kalibrierung zusätzlich durch ein Rändelwerkzeug mit zwei Rändelrädern in gleichmässigen oder ungleichmässigen Abständen mit seitlichen Verformungen (5) versehen wird.

### Claims

1. An ID card or a document in which a security filament is permanently integrated which has a cross-sectional shape, by which it can be identified, with a structure on its surface which extends invariably over the length of the filament, characterised in that the cross-sectional shape and the surface structure of the filament (1) have been produced by drawing the filament through a calibrating device.

2. An ID card or document according to claim 1, characterised in that the security filament (1) is initially produced in a specific cross-sectional shape and further structural features (5) which are repeated at short spacings are applied by additional shaping of the security filament.

3. An ID card or document according to claims 1 and 2, characterised in that the security filament (1) is produced from a metal or a metal alloy.

4. An ID card or document according to claims 1 and 2, characterised in that the security filament is made of glass or plastics.

5. A document according to claim 1, characterised in that at least one security filament (13) is bonded permanently to a document (12) and is protected by a lacquer layer (14).

6. A process for the production of an ID card or a document in which a security filament is permanently integrated which has a cross-sectional shape, by which it can be identified, with a structure on its surface which extends invariably over the length of the filament, characterised in that a filament is drawn from a starting material such as metal, metal alloys, plastics or glass, that the filament is guided through a calibrating tool, and a cross-sectional shape, by which it can be identified, and a surface structure (2, 3) are impressed on the filament by the calibrating tool.

7. A process for the production of an ID card or a document according to claim 6, characterised in that after the production and calibration steps the security filament (1) is provided with lateral shapings (5) in regular or irregular spacings by a knurling tool which has two knurling wheels.

## Revendications

1. Carte d'identification ou document dans laquelle ou lequel est intégré, de manière inamovible, un fil de sécurité ayant une section transversale d'une forme permettant de l'identifier et présentant, sur sa surface, une structure qui s'étend uniformément sur sa longueur, caractérisé en ce que la forme de la section transversale et la structure de la surface du fil de sécurité (1) sont réalisées lors de l'étirage du fil à travers un dispositif de calibrage.

2. Carte d'identification ou document suivant la revendication 1, caractérisé en ce que le fil de sécurité (1) est tout d'abord réalisé avec une section transversale d'une forme déterminée, tandis que d'autres structures (5) se répétant à de courtes distances sont appliquées par déformation complémentaire du fil de sécurité.

3. Carte d'identification ou document suivant les revendications 1 et 2, caractérisé en ce que le fil de sécurité (1) est réalisé en un métal ou en un alliage métallique.

4. Carte d'identification ou document suivant les revendications 1 et 2, caractérisé en ce que le fil de sécurité est réalisé en verre ou en matière synthétique.

5. Document suivant la revendication 1, caractérisé en ce qu'au moins un fil de sécurité (13) est collé de manière inamovible sur un document (12), tandis qu'il est protégé par une couche de vernis (14).

6. Procédé pour la réalisation d'une carte d'identification ou d'un document dans laquelle ou lequel est intégré, de manière inamovible, un fil de sécurité ayant une section transversale d'une forme permettant de l'identifier et présentant, sur sa surface, une structure s'étendant uniformément sur sa longueur, caractérisé en ce que, à partir d'une matière telle qu'un métal, un alliage métallique, une matière synthétique ou le verre, on étire un fil que l'on fait ensuite passer à travers un dispositif de calibrage dans lequel le fil reçoit une section transversale d'une forme permettant de l'identifier, ainsi qu'une structure superficielle (2, 3).

7. Procédé pour la réalisation d'une carte d'identification ou d'un document suivant la revendication 6, caractérisé en ce que, après la réalisation et le calibrage du fil de sécurité (1), on y forme des déformations latérales supplémentaires (5) au moyen d'un outil de moletage comportant deux molettes situées à des distances régulières ou irrégulières.

FIG. 1

FIG. 2

FIG. 3

FIG. 4

FIG. 5

FIG. 6